# EUROPEAN PATENT APPLICATION

(11) **EP 4 793 914 A1**
(43) Date of publication of application: **19.08.2026**
(21) Application number: 25000113.8
(22) Date of filing: 04.12.2025
(51) Int. Cl.: G07F 7/06, G06Q 20/32, G07F 9/00, G07F 9/10, G07F 11/44, G07F 11/62

(54) **DEPOSIT-RETURN PACKAGING COLLECTION SYSTEM**

(30) Priority: 18.02.2025 RO 202500007 U
(71) Applicant: SC Grupul de Distributie ETA SRL, Mun. Botosani, jud. Botosani (RO)
(72) Inventor: Parascanu, Stefan, Mun. Botosani, jud. Botosani (RO); Parascanu, Iulian, Mun. Botosani, jud. Botosani (RO)

(57) **Abstract**

A deposit-refund packaging collection system consisting of a container (1) with at least three automated access hatches (2) for depositing bags, equipped with a QR code reader (3) for user identification and bag validation (5), a secure storage space (4) where the bags are stored, an internet connectivity system for transmitting data to a monitoring centre (6) and sensors (7) for measuring the container's occupancy level (1), a mobile app that represents the digital interface between the customer and the system, allows the generation of a unique QR code for user identification, offering the option to enter bank or account details for the transfer of funds to the customer's bank account, monitoring the history of bags deposited and amounts collected; counting the bags deposited and identifying SGR packaging is done with a device (8) that allows the counting and identification of packaging that works exclusively with QR codes to ensure correct and accurate recycling management, all data necessary for the entire process is centralised by a centralised data and monitoring centre (9) that receives real-time information on the occupancy rate of the containers.

## Description

The present invention relates to a deposit-return packaging collection system, hereinafter referred to as SGR.

Currently, there is a system in place for collecting metal packaging and PET bottles, for which a deposit is retained at the time of purchase, which is refundable in the form of a voucher at the time of collection.

In the field of waste collection, there are various solutions that refer only to the collection and sorting of different types of waste in order to establish the traceability of that waste, using waste labelling, sorting, treatment and management using barcodes.

Documents CN110837989A**,** KR20230009040A or CN103302078A focus on the recycling of waste or general packaging, without limiting the purpose to packaging with a returnable deposit.

In document CN103302078A**,** financial compensation is limited to physical rewards such as prizes or vouchers.

Documents WO_2021032389_A1 or US_12024327_B2 refer only to the automation of general collection and do not include functions adapted to SGR packaging, without providing details on monitoring or automatic notifications.

The technical problem solved by the present invention consists in extending digital functionality, integrating all stages of SGR returnable packaging collection into a single flow for users, providing a fast, automated and convenient way to return packaging, with the quick transfer of its value to the user's account and real-time monitoring of the recycling status.

The returnable packaging collection system consists of a container with at least three automated hatches for depositing bags, equipped with a QR code reader to identify the user and validate the bags, a secure storage space where the bags are stored, an Internet connectivity system for transmitting data to a monitoring centre and sensors for measuring the container's occupancy level, a mobile app that represents the digital interface between the customer and the system, an app that allows the generation of a unique OR code for user identification, offering the option to enter bank or account details for the transfer of funds to the customer's bank account, monitoring the history of bags deposited and amounts collected; counting of deposited bags and identification of SGR packaging using a device that allows the counting and identification of packaging that works exclusively with QR codes to ensure correct and accurate recycling management, all data necessary for the entire process is centralised by a centralised data and monitoring centre , which receives real-time information on the occupancy rate of the containers.

The advantages of this system are:
- The end user completes the entire process in a very short time;
- It allows three customers to be served simultaneously;
- Funds are transferred directly to the customer's account;
- The system notifies the data centre about the occupancy rate of the containers, optimising collection and avoiding interruptions;
- It contributes to reducing pollution and protecting the environment;
- The entire system is managed through the mobile app and QR codes, reducing costs and manual intervention.

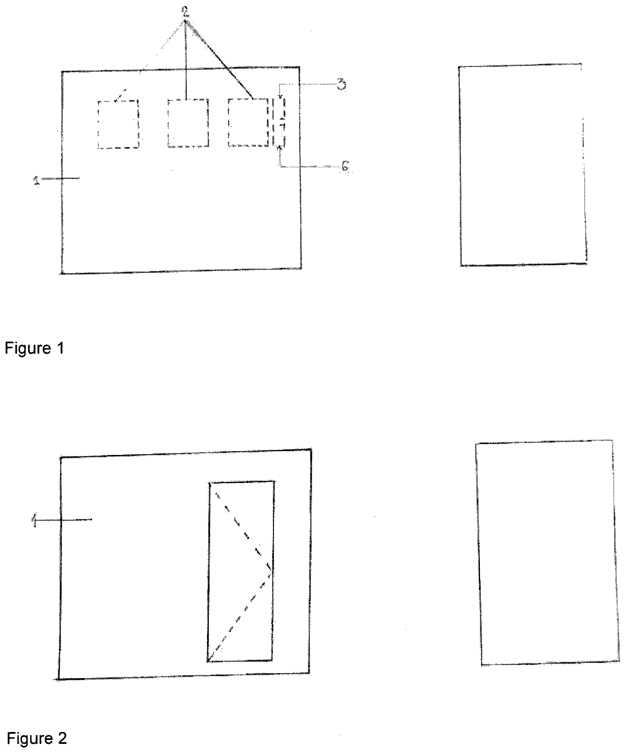

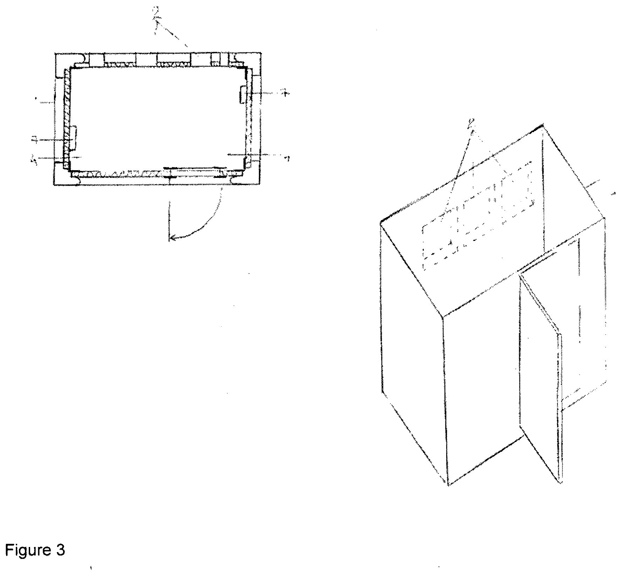

The following is an example of the invention in connection with Figures 1-3, which represent:
Figure 1 front and side view of the container;
Figure 2 rear and side view of the container;
Figure 3 top view and axonometric view of the container.

The returnable packaging collection system consists of a container **1** with at least three automated hatches **2** for depositing bags. Container **1** is equipped with a QR code reader **3** for user identification and validation of bags deposited in a secure storage space **4,** where the bags **5** are stored.

The container is connected to the Internet for data transmission to a monitoring centre **6** and is equipped with sensors **7** to measure the container's occupancy level.

A mobile app, which is the digital interface between the customer and the system, allows the generation of a unique QR code for user identification, offering the option to enter bank or account details for the transfer of funds to the customer's bank account, monitoring the history of bags deposited and amounts collected.

The bags deposited are counted and the SGR packaging is identified using a device **8** that allows the packaging to be counted and identified. This device works exclusively with QR codes to ensure correct and accurate recycling management.

All the data necessary to carry out the entire process is centralised by a centralised data and monitoring centre **9,** which receives real-time information on the occupancy rate of the containers **1.**

The operational flow consists of:

### Phase 1: Customer interaction with the container

1. Downloading the app:
   ∘ The customer downloads the app from Google Play or the App Store.
   ∘ They create a personal account and set up a payment method (e.g. IBAN, digital wallet).
2. Generating an unique QR code:
   ∘ From the app, the customer generates a personalised QR code, which is used to identify them in the system.
3. Depositing the bag in the container:
   ∘ The customer goes to the container with a bag containing SGR packaging.
   ∘ At the container, the customer scans the QR code generated from the app using the QR code reader integrated into the container.
4. Generating and applying the QR code to the bag:
   ∘ The container automatically prints a unique QR code for the bag.
   ∘ The customer sticks this QR code on their bag of packaging.
5. Bag deposit:
   ∘ The customer scans the QR code on the bag (for validation).
   ∘ The inspection hatch opens automatically.
   ∘ The customer deposits the bag in the designated space in the container, and the hatch closes.
6. Completion of the process for the customer:
   ∘ After disposal, the customer can leave, with the entire process taking less than 1 minute.

### Phase 2: Collection and processing of bags

1. Collection of bags by employees:
   ∘ The containers are monitored in real time by a data centre.
   ∘ When a container reaches its maximum number of bags, collection teams are automatically notified.
   ∘ Employees collect the bags from the container's storage space.
2. Processing of SGR packaging:
   ∘ Each bag is treated individually:
      ▪ The OR code on the bag is scanned to identify the customer.
      ▪ The employee inserts the packaging from the bag into a machine, which recognises and counts the SGR packaging.
3. Completion and transfer of funds:
   ∘ After all packaging has been scanned and validated, the amount corresponding to the value of the packaging is calculated automatically.
   ∘ The funds are transferred within 24 hours to the account specified by the customer in the mobile app.

## Claims

1. The deposit-return packaging collection system consists of a container (**1**) with at least three automated hatches (**2**) for depositing bags, **characterised in that** the container (**1**) is equipped with a QR code reader (**3**) for user identification and bag validation (**5**), a secure storage space (**4**) where the bags are stored, an internet connectivity system for transmitting data to a monitoring centre (**6**) and sensors (**7**) for measuring the occupancy level of the container (**1**), a mobile app that represents the digital interface between the customer and the system, allows the generation of a unique QR code for user identification, offering the option to enter bank or account details for the transfer of funds to the customer's bank account, monitoring the history of bags deposited and amounts collected; counting the bags deposited and identifying SGR packaging using a device (**8**) that allows the counting and identification of packaging that works exclusively with QR codes to ensure correct and accurate recycling management, all data necessary for the entire process is centralised by a centralised data and monitoring centre (**9**) that receives real-time information on the occupancy rate of the containers.
